# EUROPEAN PATENT APPLICATION

(11) **EP 2 781 375 A1**
(43) Date of publication of application: **24.09.2014**
(21) Application number: 12847337.8
(22) Date of filing: 06.11.2012
(51) Int. Cl.: B60C 13/00, B60C 13/04

(54) **TIRE**

(30) Priority: 08.11.2011 JP 2011244938; 11.01.2012 JP 2012003538
(71) Applicant: Bridgestone Corporation, Tokyo 104-8340 (JP)
(72) Inventor: MIYASAKA, Atsushi, Kodaira-shi Tokyo 187-8531 (JP); ITOI, Dyta, Kodaira-shi Tokyo 187-8531 (JP); IWABUCHI, Sotaro, Kodaira-shi Tokyo 187-8531 (JP)
(74) Representative: Oxley, Robin John George
(86) International application number: PCT/JP2012/007111
(87) International publication number: WO 2013/069260

(57) **Abstract**

A tire includes a decoration portion, formed by printing, extending in the tire circumferential direction in at least a portion of the outer surface of at least one side portion of the tire. The decoration portion includes a gradation portion in which at least one of hue, saturation, and value changes incrementally in a longitudinal direction.

## Description

### TECHNICAL FIELD

The present invention relates to a new technique for reducing the noticeability of unevenness, occurring due to production or structure of a tire, on the outer surface of the side portion.

### BACKGROUND ART

The joint portion where edges of the carcass layer in the tire circumferential direction overlap, or the turn-up end in the tire radial direction, appears as a local unevenness on the outer surface of the side portion of a tire. In particular when the tire internal pressure is high or the side rubber is thin, this unevenness easily becomes noticeable, detracting from the appearance of the tire. With a reduction in the noticeability of such a local unevenness as one objective, conventionally a strip-shaped decoration portion has been formed normally by providing a plurality of minute protrusions called ridges on the outer surface of the side portion of a tire (for example, see Patent Literature 1). With this technique, noticeability of the unevenness is reduced by, for example, light reflecting on the ridge surfaces.

### CITATION LIST

### Patent Literature

PTL 1: JP2004-299662A

### SUMMARY OF INVENTION

The above ridges, however, have the following problems. As a result of repeated deformation of the side portion during driving, stress concentrates in or between the ridges, and cracks easily form. Furthermore, air resistance increases during driving, since the ridges are higher than the side portion surface.

It is therefore an object of the present invention to provide a new technique, instead of forming a plurality of ridges, that can reduce the noticeability of unevenness on the side portion outer surface of a tire.

The present invention has been conceived to resolve the above problems, and a tire according to the present invention includes a decoration portion, formed by printing, extending in a tire circumferential direction in at least a portion of an outer surface of at least one side portion of the tire, the decoration portion including at least one gradation portion in which at least one of hue, saturation, and value changes incrementally in a longitudinal direction.

In the present disclosure, a "color shade" refers to a difference (change) in at least one of hue, saturation, and value (brightness).

According to the present invention, an unevenness on the side portion outer surface can be camouflaged by the gradation portion in the decoration portion, thus reducing the noticeability of the unevenness.

### BRIEF DESCRIPTION OF DRAWINGS

The present invention will be further described below with reference to the accompanying drawings, wherein:
FIG. 1 is a cross-sectional diagram (half-view) in the tire width direction showing a rim-mounted pneumatic tire of Embodiment 1 according to the present invention;
FIG. 2 is a partial side view of the side portion of the tire in FIG. 1;
FIG. 3 is an enlarged view of one gradation portion in FIG. 2;
FIG. 4 is a partial side view showing a rim-mounted pneumatic tire of Embodiment 2 according to the present invention;
FIG. 5 is a partial side view showing a rim-mounted pneumatic tire of Embodiment 3 according to the present invention;
FIG. 6 is an enlarged view of a portion of the decoration portion in FIG. 5; and
FIG. 7 schematically illustrates the decoration portion in a tire of Embodiment 4 according to the present invention.

### DESCRIPTION OF EMBODIMENTS

The following describes embodiments of the present invention in detail with reference to the drawings.

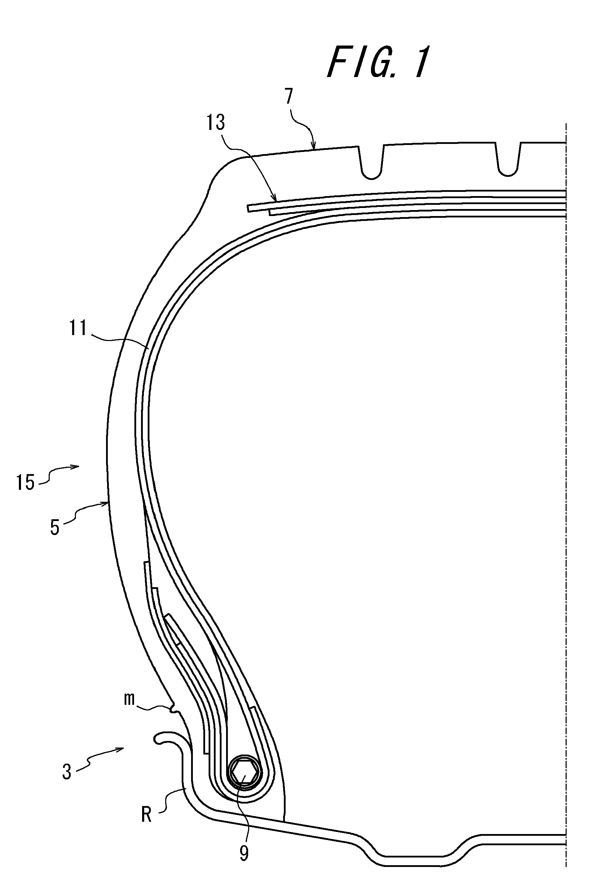

The present invention may be applied to a pneumatic tire that, as illustrated in FIG. 1, can be provided with a pair of bead portions 3, a pair of sidewalls 5 extending in the tire radial direction from the bead portions 3, and a tread portion 7 extending between the sidewalls 5, and provided inside the tire with a carcass layer 11 and a belt layer 13 on the tire radial direction outer side of the carcass layer 11. The carcass layer 11 extends toroidally across the bead portions 3, the sidewalls 5, and the tread portion 7, and the ends thereof turn up around respective bead cores 9 embedded in the bead portions 3. The present invention may of course also be applied to a solid tire (not illustrated). The unevenness on the side portion outer surface targeted by the present invention is not limited to being formed by the joint portion of the carcass layers or the turn-up end in the tire radial direction. Rather, unevenness that may occur due to production or structure of a tire, such as non-uniform flow of rubber during vulcanization, may also be targeted. The following describes examples of applying the present invention to a pneumatic tire.

As illustrated in FIG. 1, a side portion 15 includes the above sidewall 5 and bead portion 3. In greater detail, the side portion 15 refers to the range from the tire width direction outer edge of the tread surface to the rim engaging portion of the bead portion 3. When the tire is a pneumatic tire that is mounted on a regular rim, filled to regular internal pressure, and pressed against a flat surface with a regular load applied, the "tread surface" refers to the surface of the tread portion in contact with the flat surface. A regular rim refers to the "standard rim" prescribed by JATMA, the "Design Rim" prescribed by TRA, or the "Measuring Rim" prescribed by ETRTO. Regular internal pressure refers to the "maximum air pressure" prescribed by JATMA, the maximum value of the "TIRE LOAD LIMITS AT VARIOUS COLD INFLATION PRESSURES" prescribed by TRA, or the "INFLATION PRESSURES" prescribed by ETRTO. A regular load refers to the "maximum load capability" prescribed by JATMA, the maximum value of the "TIRE LOAD LIMITS AT VARIOUS COLD INFLATION PRESSURES" prescribed by TRA, or the "LOAD CAPACITY" prescribed by ETRTO. In the figures, the reference sign R indicates the rim. Furthermore, in the present disclosure, the "length in the tire circumferential direction" and "length in the tire radial direction" of the gradation portion refer to lengths measured when a pneumatic tire is mounted on a regular rim, filled to regular internal pressure, and in a no-load condition.

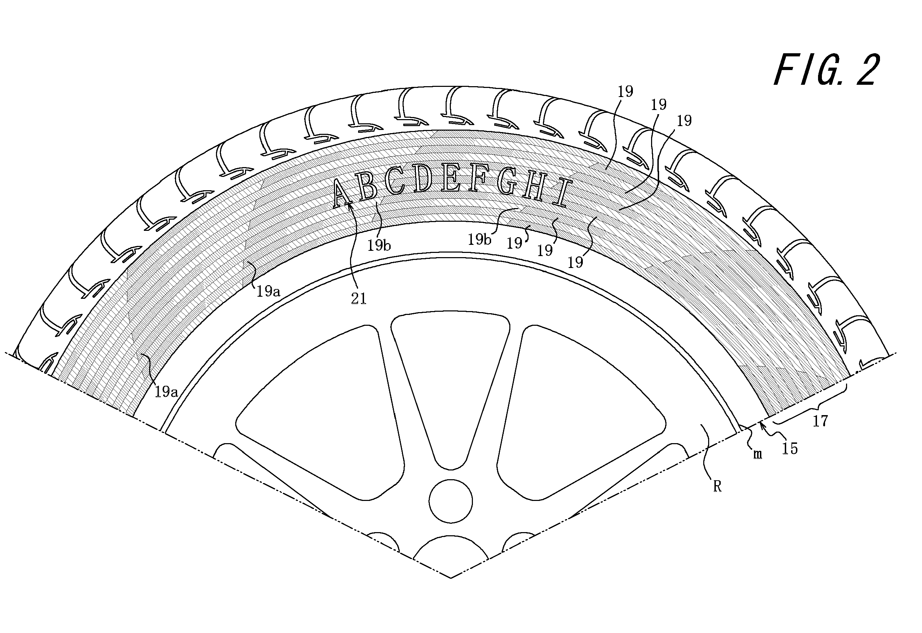

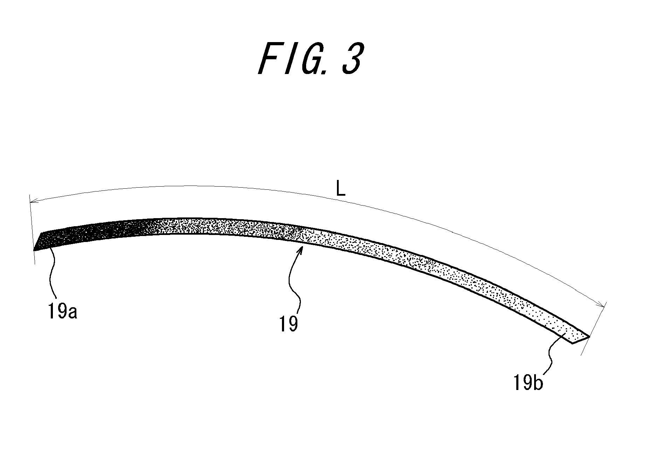

As illustrated in FIG. 2, the tire is provided with an annular decoration portion 17, formed by printing, in a region of at least a portion of the outer surface of at least one (in this example, one) side portion 15. The decoration portion 17 need not extend around the entire side portion 15 and may instead be provided intermittently or at only a portion in the tire circumferential direction. To guarantee visibility of indications (not illustrated) required by law and provided adjacent to the rim line m further toward the tire radial direction outer side, the decoration portion 17 is preferably provided at a distance of at least 15 mm from the rim line m toward the tire radial direction outer side. The decoration portion 17 includes a plurality of gradation portions 19 formed by printing, FIG. 3 showing an enlarged view thereof. Each gradation portion 19 extends in the tire circumferential direction, and at least one of hue, saturation, and value (referred to below as "hue and the like") changes incrementally in the tire circumferential direction from one tire circumferential direction edge 19a to the other edge 19b. The decoration portion 17 may be formed on both side portions 15 of the tire. When forming the decoration portion 17, a known printing technique such as inkjet printing, relief printing, intaglio printing, planographic printing, or the like may be used. In this example, the tire circumferential direction is the longitudinal direction of the gradation portions 19, and the tire radial direction is the width direction of the gradation portions 19.

To describe the decoration portion 17 concretely in detail, the decoration portion 17 includes a plurality of the gradation portions 19, each gradation portion 19 is strip-shaped, being elongated in the tire circumferential direction, and the strip-shaped gradation portions 19 are provided continuously in the tire circumferential direction so that color shades are repeated in the tire circumferential direction, as illustrated in FIG. 2. Two or more (in this example, 12) of the gradation portions are adjacent in the tire radial direction. Additionally, shades of gradation portions 19 adjacent in the tire radial direction are shifted in phase from each other in the tire circumferential direction.

Furthermore, the strip-shaped gradation portions 19 are arranged so that shades of gradation portions 19 adjacent in the tire radial direction, with one gradation portion 19 therebetween, are shifted in phase toward one side in the tire circumferential direction with a relatively small phase difference.

In each gradation portion 19, in order to express the gradation, any one of hue, saturation, and value may be fixed, with the other two changing incrementally from one tire circumferential direction edge 19a to the other edge 19b, or any two of hue, saturation, and value may be fixed, with the remaining one changing incrementally from one tire circumferential direction edge 19a to the other edge 19b. Alternatively, gradation in the gradation portion 19 may be expressed by changing all three of hue, saturation, and value incrementally from one tire circumferential direction edge 19a to the other edge 19b. In this example, each gradation portion 19 has a gradation such that with a fixed hue of 240° and saturation of 80%, the value changes incrementally (smoothly) from 80% to 30% (value difference of 50%) from one tire circumferential direction edge 19a to the other edge 19b. In the present embodiment, at least one of hue, saturation, and value of the gradation portion 19 (in this example, value) changes, from one tire circumferential direction edge 19a of the gradation portion 19 to the other edge 19b, so as to approach black (value of 0%), i.e. the ground color of the tire side portion 15. Note that value (brightness), saturation, and hue are defined in the HSV model (HSV color space). Value, saturation, and hue may be measured with the following method. Specifically, after using a spectral colorimeter (for example, produced by Konica Minolta) to measure the value, saturation, and hue of the gradation portion 19 with a different system (for example, a Lab color space), necessary software (for example, photoshop (registered trademark)) is then used for conversion to the HSV system.

In the present embodiment, in addition to changing in the tire circumferential direction, at least one of hue, saturation, and value changes in the gradation portions 19 from one edge (inner edge) to the other edge (outer edge) in the tire radial direction. In this example, each gradation portion 19 has a gradation such that with two of hue, saturation, and value in the HSV model being a fixed 240% (degrees) and 80%, the remaining value changes incrementally (smoothly) from 80% (degrees) to 30% (degrees) from the inner edge to the outer edge in the tire radial direction.

Reference number 21 in FIG. 2 indicates marks composed of characters, symbols, and the like printed in a different color (in this case, white) from the gradation portion 19 and having the gradation portion 19 as a background. By thus providing the marks 21 overlaid on the gradation portion 19, visibility of the marks 21 is increased.

According to the tire with the above structure, the color shades of the gradation portions 19 formed in the side portion 15 of the tire camouflage a local unevenness (level difference) occurring in the side portion 15 due to the joint portion where edges of the carcass layer 11 in the tire circumferential direction overlap, the turn-up end in the tire radial direction, or the like. Therefore, noticeability of the unevenness can be reduced (referred to below as a "camouflage effect"). Furthermore, the gradation portions 19 are flat surfaces formed by printing. As compared to forming the decoration portion with the above-described ridges, as with a conventional technique, the air resistance due to the decoration portion during tire rotation can be greatly reduced, and cracks caused by the ridges as described above do not occur in the side portion 15.

According to the tire of the above embodiment, at least one of hue, saturation, and value of each gradation portion 19 changes, from one tire circumferential direction edge 19a of the gradation portion 19 to the other edge 19b, so as to approach the ground color of the tire side portion 15, thereby making the gradation portion 19 visually blend with the tire.

Furthermore, according to the above embodiment, since at least one of hue, saturation, and value of the gradation portion 19 changes incrementally in the tire radial direction, in particular an unevenness (level difference) in the tire radial direction occurring due to the turn-up end of the carcass layer 11 or the like can be made less visibly noticeable.

Furthermore, since each gradation portion 19 is strip-shaped in the above embodiment, a gradation pattern that repeats in the tire circumferential direction can be formed. By providing a phase difference between color shades of gradation portions 19 adjacent in the tire radial direction (phase difference in the tire circumferential direction), color shades alternate in the tire radial direction, so that noticeability of an unevenness (level difference) occurring due to the turn-up end of the carcass layer 11 or the like can be even further reduced. When a decoration portion 17 exceeding the width of the printing head is formed by inkjet printing, printing needs to be performed multiple times in the tire radial direction. At that time, by aligning the printing border with the border of strip-shaped gradation portions 19 adjacent in the tire radial direction, noticeability of the printing border can be reduced.

In the present embodiment, the difference in phase of shades, when viewed in the tire circumferential direction, between the gradation portions 19 adjacent in the tire radial direction is preferably from 25% to 75% (50% in the above embodiment), with 0% representing the same phase. In this way, gradation portions 19 adjacent in the tire radial direction can be identified reliably. In other words, if the difference in phase of shades between the gradation portions 19 adjacent in the tire radial direction is less than 25% or more than 75%, the gradation portions 19 adjacent in the tire radial direction become visually integrated, which may lessen the effect of reducing the noticeability of the unevenness (level difference) in the tire radial direction occurring due to the turn-up end of the carcass layer 11 or the like.

In the present embodiment, the strip-shaped gradation portions 19 are preferably arranged so that, when viewed in the tire circumferential direction, shades of gradation portions 19 adjacent in the tire radial direction with one gradation portion 19 therebetween are shifted in phase slightly toward one side in the tire circumferential direction with a phase difference of 0% to 30% (a phase difference of 25% in the above embodiment), with 0% representing the same phase. In this way, a sense of "flow" or "speed" can be expressed throughout the decoration portion 17, and a uniform design can be created. Alternatively, the strip-shaped gradation portions 19 may be disposed so that the shades of gradation portions 19 adjacent in the tire radial direction, with one gradation portion 19 therebetween, are in phase (not illustrated). A sense of unity and coherence of color can thus be expressed.

In the present embodiment, the gradation portions 19 preferably have a length L in the tire circumferential direction of 5 mm to 300 mm. The reason is that if the length L of each gradation portion 19 in the tire circumferential direction is less than 5 mm, the gradation effect of the gradation portion 19 may not be sufficiently achieved, and it may not be possible to camouflage the unevenness on the side portion 15 surface sufficiently. Conversely, if the length L exceeds 300 mm, the change in hue or the like per unit length decreases. As a result, the gradation effect may not be sufficiently achieved, and it may not be possible to camouflage the unevenness on the side portion 15 surface sufficiently.

The gradation portions 19 preferably have a length in the tire radial direction of 5 mm to 100 mm. The reason is that if the length of each gradation portion 19 in the tire radial direction is less than 5 mm, the gradation effect of the gradation portion 19 may not be sufficiently achieved, and it may not be possible to camouflage the unevenness on the side portion surface sufficiently. Conversely, if the length exceeds 100 mm, the change in hue or the like per unit length decreases. As a result, the gradation effect may not be sufficiently achieved, and it may not be possible to camouflage the unevenness on the side portion 15 surface sufficiently. The reason that the maximum value of the length of each gradation portion 19 in the tire radial direction is set to 100 mm, as opposed to the maximum value of the length in the tire circumferential direction of 300 mm, is that the effect is diminished if the distance in the tire radial direction is too long, since the shape of a pneumatic tire changes greatly in a tire radial direction cross-section.

In the present embodiment, when the value and saturation are fixed and the hue is changed, then in the HSV model, the hue difference (difference between the minimum and maximum of the hue) is preferably at least 30°. The reason is that if the hue difference in the gradation portion 19 is less than 30°, the above camouflage effect due to gradation may be insufficient.

Similarly, when the hue and saturation are fixed and the value is changed, then in the HSV model, the value difference (difference between the minimum and maximum of the value) is preferably at least 30%. The reason is that if the value difference in the gradation portion 19 is less than 30%, the above camouflage effect due to gradation may be insufficient.

Similarly, when the hue and value are fixed and the saturation is changed, then in the HSV model, the saturation difference (difference between the minimum and maximum of the saturation) is preferably at least 30%. The reason is that if the saturation difference in the gradation portion 19 is less than 30%, the above camouflage effect due to gradation may be insufficient.

Furthermore, in the present embodiment, the decoration portion 17 is preferably provided on the side portion 15 at least in a range from the tread pattern edge to a position 10 mm to 15 mm outward from the rim line portion (the portion nearly corresponding to the rim flange). The reason is that unevenness in the side portion easily occurs near the ply turn-up end, and the turn-up end is often located between the tread pattern edge and the rim line position, most often near the maximum width. On the other hand, indications (tire size or the like) prescribed by regulations (JATMA, ETRTO, and the like) need to be provided near the rim line. Since each set of regulations specifies a position for indications that is often inward from the maximum width, a space for indications of approximately 10 mm to 15 mm outward from the rim line is necessary. Accordingly, not providing decoration within the above range makes the indications more legible and is therefore preferable.

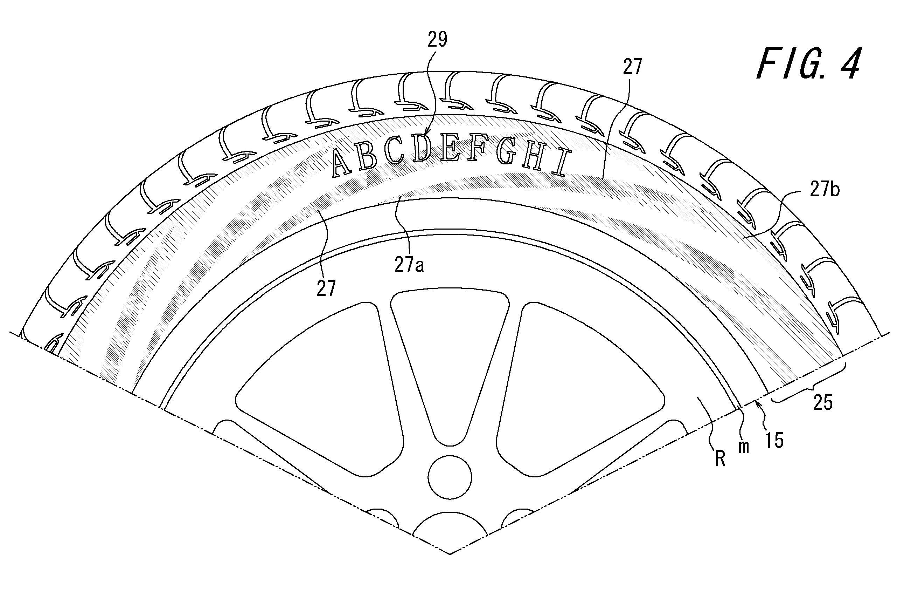

FIG. 4 is a partial side view of the side portion of a tire in another embodiment according to the present invention.

This tire is similar to the tire of the previous embodiment in that the tire includes a decoration portion 25, formed by printing, in at least a portion of the outer surface of the side portion 15, and in that the decoration portion 25 includes gradation portions 27 that extend in the tire circumferential direction and in which at least one of hue, saturation, and value changes incrementally in the tire circumferential direction. The structure of each gradation portion 27, however, differs. Specifically, in the tire of the present embodiment, the decoration portion 25 includes a plurality of gradation portions 27 provided at predetermined intervals in the tire circumferential direction. Each gradation portion 27 extends in the tire circumferential direction from the inner edge to the outer edge in the tire radial direction while being inclined, with respect to the tire radial direction, toward one side in the tire circumferential direction. In the illustrated example, each gradation portion 27 has a gradation such that, in the HSV model, with a fixed hue of 240° and saturation of 80%, the value changes incrementally (continuously) from 80% to 30% (value difference of 50%) from one tire circumferential direction edge 27a to the other edge 27b. Of course, in this embodiment as well, the gradation in each gradation portion 27 is not limited to the illustrated example, and gradation may be expressed by incrementally changing any two or all three of hue, saturation, and value. In the present embodiment, (white) marks 29 composed of characters or the like are also printed so as to overlap the gradation portions 27.

According to the tire of the present embodiment, like the tire of the previous embodiment, the color shades of the gradation portions 27 formed in the side portion 15 of the tire camouflage a local unevenness (level difference) occurring in the side portion 15 due to the joint portion where edges of the carcass layer 11 in the tire circumferential direction overlap or due to the turn-up end in the tire radial direction. Therefore, noticeability of the unevenness can be reduced. Furthermore, the gradation portions 27 are flat surfaces formed by printing. As compared to forming the decoration portion with the above-described ridges, as with a conventional technique, the air resistance due to the decoration portion during tire rotation can be greatly reduced, and cracks caused by the ridges as described above do not occur in the side portion. In the decoration illustrated in FIG. 2, the gradation portions are divided into strips in the tire radial direction, making it easy to partition printing sections. Hence, this example is particularly preferable when there is a desire for widening the printing width in the tire radial direction. By contrast, in the embodiment illustrated in FIG. 4, the gradation portions extend in the tire radial direction, unlike the decoration in FIG. 2, thereby providing a dynamic impression.

Only a portion of the present invention has been described above, and a variety of modifications and alterations may be made to the present invention. For example, the color (hue) of the gradation portion may be aligned nearly with the color of the vehicle body on which the tire is mounted, thus creating a design integrated with the vehicle body.

The following describes yet another embodiment of the present invention.

The present embodiment may be applied to a pneumatic tire that, as illustrated in FIG. 1, can be provided with a pair of bead portions 3, a pair of sidewalls 5 extending toward the tire radial direction outer side of the bead portions 3, and a tread portion 7 extending between the sidewalls 5, and provided inside the tire with a carcass layer 11 and a belt layer 13 on the tire radial direction outer side of the carcass layer 11. The carcass layer 11 extends toroidally across the bead portions 3, the sidewalls 5, and the tread portion 7, and the ends thereof turn up around respective bead cores 9 embedded in the bead portions 3. The present embodiment is not limited to the above pneumatic tire and may of course also be applied to a solid tire (not illustrated). The unevenness on the side portion outer surface targeted by the present invention is not limited to being formed by the joint portion of the carcass layers or the turn-up end in the tire radial direction. Rather, unevenness that may occur due to production or structure of a tire, such as non-uniform flow of rubber during vulcanization, may also be targeted. The following describes examples of applying the present invention to a pneumatic tire.

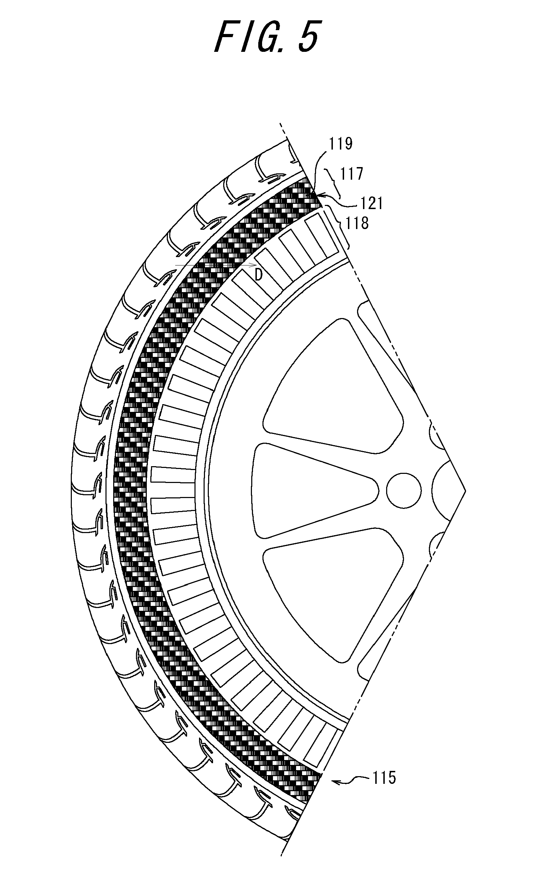

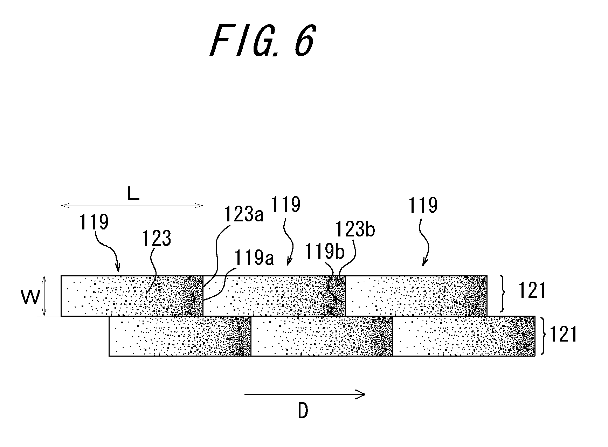

As illustrated in FIG. 5, the tire is provided with an annular decoration portion 117, formed by printing, in a region of at least a portion of the outer surface of at least one (in this example, one) side portion 115. The decoration portion 117 may extend across the entire side portion 115 or be provided in only a portion of the side portion 115. The decoration portion 117 is composed of a plurality of decoration portion rows 121 each made up of a plurality of gradation portions 119 linearly arranged in parallel. In the present embodiment, each decoration portion row 121 is formed by arranging the gradation portions 119 linearly in a parallel arrangement direction D, and the decoration portion rows 121 are continuously arranged perpendicular to the parallel arrangement direction D while shifting the phase thereof. In other words, the gradation portions 119 are in a staggered arrangement with no gaps. As illustrated by the enlarged view in FIG. 6, each gradation portion 119 includes a gradation element 123 formed by printing. In each gradation element 123, at least one of value, saturation, and hue (referred to below as "value or the like") changes incrementally along the parallel arrangement direction D from one edge 123a to the other edge 123b (i.e. in this case, in the longitudinal direction of a rectangle). The decoration portion 117 may be formed on both side portions 115 of the tire. The method for forming the decoration portion 117 may be a known printing technique such as inkjet printing, relief printing, intaglio printing, planographic printing, or the like.

The following describes the decoration portion 117 based on a concrete example. In the present embodiment, each gradation portion 119 forming the decoration portion 117 is rectangular, and in the gradation element 123, at least one of value and the like changes incrementally along the longitudinal direction of the rectangular gradation portion 119 from one short side 119a to the other short side 119b. In other words, in this case, the edge 123a of the gradation element 123 matches one short side 119a of the gradation portion 119, and the other edge 123b of the gradation element 123 matches the other short side 119b of the gradation portion 119. Decoration portion rows 121 in which color shades are repeated are formed by the rectangular gradation portions 119, which include this gradation element 123, being repeatedly arranged in parallel linearly along the longitudinal direction. Furthermore, for adjacent decoration portion rows 121, the phase is shifted in the parallel arrangement direction D between the gradation portions 119 of one decoration portion row 121 and the gradation portions 119 of the other decoration portion row 121. In other words, color shades do not match between adjacent decoration portion rows 121. In this example, the shape is identical for all of the gradation portions 119 formed by printing, yet the shape need not be identical. Furthermore, all of the decoration portion rows 121 are arranged in a parallel direction in this case, yet not all need be arranged in parallel.

In each gradation element 123, in order to express the gradation, any one of value, saturation, and hue may be fixed, with the other two changing incrementally from one edge 123a to the other edge 123b of the gradation portion 119 in the parallel arrangement direction D, or any two of value, saturation, and hue may be fixed, with the remaining one changing incrementally from one edge 123a to the other edge 123b. Alternatively, gradation in the gradation element 123 may be expressed by changing all three of value, saturation, and hue incrementally from one edge 123a to the other edge 123b.

In this example, each gradation element 123 has a gradation such that with a fixed hue and saturation, the value changes incrementally (smoothly) from 80% to 30% (value difference of 50%) from one edge 123a to the other edge 123b. Note that value (brightness), saturation, and hue are defined in the HSV model (HSV color space). Value, saturation, and hue may be measured with the following method. Specifically, after using a spectral colorimeter (for example, produced by Konica Minolta) to measure the value, saturation, and hue of the gradation element 123 with a different system (for example, a Lab color space), necessary software (for example, photoshop (registered trademark)) is then used for conversion to the HSV system.

According to the tire with the above structure, repetition of the color shades of the gradation elements 123 formed by printing in the side portion 115 of the tire camouflage a local unevenness (level difference) occurring in the side portion 115 outer surface due to the joint portion where edges of the carcass layer 11 in the tire circumferential direction overlap, the turn-up end in the tire radial direction, or the like. Therefore, noticeability of the unevenness can be reduced. Furthermore, the gradation elements 123 are flat surfaces formed by printing. As compared to forming the decoration portion with the above-described ridges, as with a conventional technique, the air resistance due to the decoration portion during tire rotation can be greatly reduced, and cracks caused by the ridges as described above do not occur in the side portion 115.

According to the tire of the above embodiment, the decoration portion 117 is formed by a plurality of decoration portion rows 121 made up of gradation portions 119 linearly arranged in parallel. Therefore, the noticeability of the above unevenness can be even further reduced by the synergistic effect of color shades being repeated not only in the parallel arrangement direction D but also in a direction perpendicular to the parallel arrangement direction.

Furthermore, according to the above embodiment, for adjacent decoration portion rows 121, the phase is shifted in the parallel arrangement direction D of the gradation portions 119 between the gradation portions 119 of one decoration portion row 121 and the gradation portions 119 of the other decoration portion row 121. Hence, the gradation elements 123 can be reliably identified visually, thereby reliably enhancing the effect of reducing the noticeability of the unevenness.

Note that in the present embodiment, for adjacent decoration portion rows 121, the phase difference between the gradation portions 119 of one decoration portion row 121 and the gradation portions 119 of the other decoration portion row 121 is preferably in a range of 30% to 70% of the length along the parallel arrangement direction D of the gradation portions 119, with 0% representing the same phase. In this way, the boundary between gradation elements 123 can reliably be identified visually, thereby enhancing the effect of reducing the noticeability of the unevenness on the side portion 115 outer surface. In other words, when the above phase difference is less than 30% or greater than 70%, the gradation elements 123 between adjacent decoration portion rows 121 almost become visually integrated, which may lessen the effect of reducing the noticeability of the unevenness on the side portion 115 outer surface.

In the present embodiment, the length L in the longitudinal direction of the gradation portion 119 along the parallel arrangement direction is preferably in a range of 100% to 400% of the width W of the gradation portion 119. The gradation elements 123 can thus more reliably be identified visually, enhancing the effect of reducing the noticeability of the unevenness on the side portion 115 outer surface. At less than 100% of the width W, the gradation may be difficult to express clearly, whereas at more than 400% of the width W, the number of decoration portions in the parallel arrangement direction decreases, which may lessen the effect of reducing the noticeability of the unevenness.

Furthermore, in the present invention, the width of each gradation portion 119 is preferably in a range of 1 mm to 5 mm. At less than 1 mm, the gradation portions 119 are too small, and the individual gradation elements 123 may be difficult to identify visually, whereas at more than 5 mm, the synergistic effect of repetition becomes difficult to achieve, which may lessen the effect of reducing the noticeability of the unevenness on the side portion 115 outer surface.

Furthermore, in the present invention, the gradation element 123 preferably has (in the HSV model) a value difference (difference between the minimum and maximum of the value) of at least 50%, a saturation difference (difference between the minimum and maximum of the saturation) of at least 50%, and/or a hue difference (difference between the minimum and maximum of the hue) of at least 40°. In the gradation element 123, if the value difference is less than 50%, the saturation difference less than 50%, or the hue difference less than 40°, the individual gradation elements 123 become difficult to identify, which may yield an insufficient effect of reducing the noticeability of the unevenness on the side portion 115 outer surface.

Furthermore, in the present invention, the decoration portion 117 is preferably provided on the side portion 115 in a region further toward the tire radial direction outer side than the tire maximum width position. In this way, the gradation portions 119 are provided particularly in a thin region that is easily affected by the difference in rigidity at a structural edge, thereby more effectively reducing the noticeability of the unevenness.

Furthermore, in the present invention, an inner decoration portion 118, formed by printing, is preferably provided in a region on a tire radial direction inner side of a region in which the decoration portion 117 is provided. In this way, the side portion 115 of the tire can be made to appear as though it were part of the wheel, yielding the appearance of a tire with a larger than actual wheel rim diameter. The inner decoration portion 118 may be a plain color, without a change in value or the like.

Furthermore, in the present invention, the inner decoration portion 118 is preferably a color such that the product of value and saturation is at least 20%. If the color is such that the product of value and saturation is less than 20%, the color cannot be sufficiently identified when compared to the color of the tire itself (black), possibly preventing the appearance of being a part of the wheel.

Furthermore, in the present embodiment, when the side portion 115 outer surface, excluding a region 10 mm to 25 mm in the tire radial direction from the rim line m, is designated as a displayable region, the inner decoration portion 118 is preferably provided in a range of at least 20% of a tire radial direction height h within the displayable region. In this way, the appearance of being a part of the wheel can be achieved more reliably. If the range is less than 20%, the appearance of being a part of the wheel might not be sufficiently achieved.

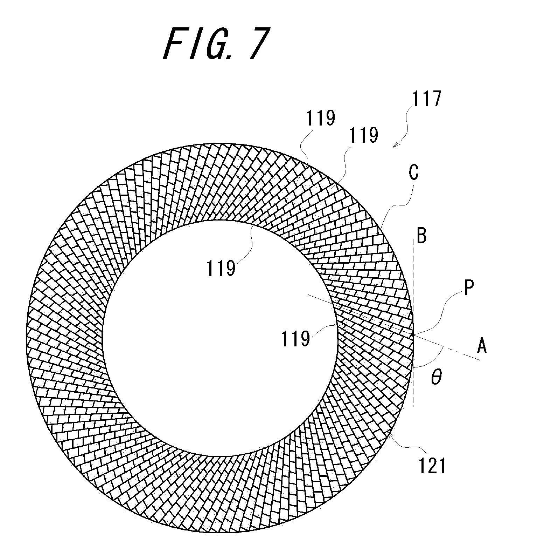

FIG. 7 schematically illustrates the decoration portion 117 in the side portion of a tire of Embodiment 4 according to the present invention. In FIG. 7, gradation portions 119 are provided with gradation elements like the previous embodiment, although the gradation elements are not illustrated. This tire is the same as the tire of the previous embodiment with regard to the following points. The tire includes a decoration portion 117, formed by printing, in a region on the outer surface of the side portion 115. The decoration portion group is formed by a plurality of decoration portion rows 121 each having a plurality of gradation portions 119 linearly arranged in parallel. Each gradation portion 119 includes a gradation element, and in each gradation element, at least one of value and the like changes incrementally from one edge to the other edge in the parallel arrangement direction. This tire differs, however, in that the directions in which the decoration portion rows 121 are arranged are not parallel. Specifically, as illustrated in FIG. 7, a parallel arrangement direction A traversing the center of each decoration portion row 121 is inclined so that, by a point P where the parallel arrangement direction A intersects a circle C forming the outline of the annular decoration portion 117, the angle θ between the parallel arrangement direction A and a tangent B to the point P is constant. In this case, each gradation portion 119 has a smaller shape as the decoration portion is further toward the tire radial direction inner side and has a larger shape as the decoration portion is further toward the outer side. Furthermore, each gradation portion 119 is a quadrilateral with a shorter side on the tire radial direction inner side and a longer side on the outer side.

According to the tire of the present embodiment, like the tire of the previous embodiment, the color shades of the gradation elements formed in the side portion 115 of the tire camouflage a local unevenness (level difference) occurring in the side portion due to the joint portion where edges of the carcass layer 11 in the tire circumferential direction overlap, the turn-up end in the tire radial direction, or the like. Therefore, noticeability of the unevenness can be reduced. Furthermore, the gradation elements are flat surfaces formed by printing. As compared to forming the decoration portion with the above-described ridges, as with a conventional technique, the air resistance due to the decoration portion during tire rotation can be greatly reduced, and cracks caused by the ridges as described above do not occur in the side portion. Moreover, in addition to achieving effects equivalent to those of the previous basic embodiments, in the present embodiment the decoration portion group is easy to set in a tire that is designed with a special coordinate system by virtue of being a rotating body.

### EXAMPLES

### (Evaluation 1)

The following describes an experiment in which the value difference, saturation difference, and hue difference in the gradation portion of example tires according to the present invention were varied, and the unevenness occurring in the side portion of each tire was visually confirmed to evaluate the noticeability of the unevenness.

The tires in Examples 1 to 11 each had a size of 195/65R15, and using the decoration portion illustrated in FIG. 2 as a starting point, the side portion of each tire was provided with a decoration portion in which the gradation portion was changed as shown in Table 1a and Table 1b. In the tires of Examples 1 to 11, the range in which the decoration portion was provided was an annular region extending 55 mm in the tire radial direction from a position 15 mm toward the tire radial direction outer side from the rim line. Tables 1a and 1b show the length in the tire circumferential direction and length in the tire radial direction of the strip-shaped gradation portion, as well as the value difference (%), saturation difference (%), and hue difference (degrees) in the tire circumferential direction of the gradation portion in accordance with the HSV model.

The tire of Comparative Example 1 had a size of 195/65R15, and the side portion was provided with a decoration portion in which the value changes incrementally only in the tire radial direction, i.e. the width direction, so that the hue, saturation, and value did not change in the longitudinal direction. In the tire of Comparative Example 1, the range in which the decoration portion was provided was an annular region extending 55 mm in the tire radial direction from a position 15 mm toward the tire radial direction outer side from the rim line. Tables 1a and 1b show the length in the tire circumferential direction and length in the tire radial direction of the strip-shaped gradation portion, as well as the value difference (%), saturation difference (%), and hue difference (degrees) in the tire circumferential direction of the gradation portion in accordance with the HSV model.

Next, the tires in Examples 12 to 21 each had a size of 195/65R15, and using the decoration portion illustrated in FIG. 4 as a starting point, the side portion of each tire was provided with a decoration portion in which the gradation portion was changed as shown in Tables 1a and 1b. In the tires of Examples 12 to 21, the range in which the decoration portion was provided was an annular region extending 55 mm in the tire radial direction from a position 15 mm toward the tire radial direction outer side from the rim line. Tables 2a and 2b show the length in the tire circumferential direction and length in the tire radial direction of the gradation portion, as well as the value difference (%), saturation difference (%), and hue difference (degrees) in the tire circumferential direction and tire radial direction of the gradation portion in accordance with the HSV model.

The tire of a Conventional Example had a size of 195/65R15, and a decoration portion formed by ridges was provided in the side portion.

The noticeability of the unevenness was determined visually after mounting each test tire on a 6J × 15 size rim and applying maximum internal pressure (240 kPa) in accordance with JATMA regulations. Tables 1a, 1b, 2a and 2b list the evaluation results. The results of Tables 1a, 1b, 2a and 2b represent a three-level visual evaluation by 30 viewers. When the number of viewers considering that the unevenness was noticeable was less than 10, a value of "3" was assigned. When the number of viewers considering that the unevenness was noticeable was at least 10 and less than 20, a value of "2" was assigned. Finally, when the number of viewers considering that the unevenness was noticeable was at least 20, a value of "1" was assigned.

**[Table 1a]**

| | Example 1 | Example 2 | Example 3 | Example 4 | Example 5 | Example 6 |
|---|---|---|---|---|---|---|
| Value difference (%) | 50 | 75 | 25 | 0 | 0 | 0 |
| Saturation difference (%) | 0 | 0 | 0 | 50 | 75 | 25 |
| Hue difference (degrees) | 0° | 0° | 0° | 0° | 0° | 0° |
| Length in tire circumferential direction of gradation portion (mm) | 220 | 220 | 220 | 220 | 220 | 220 |
| Length in tire radial direction of gradation portion (mm) | 6 | 6 | 6 | 6 | 6 | 6 |
| Noticeability of unevenness (three-level sensory evaluation) | 3 | 3 | 2 | 3 | 3 | 2 |

**[Table 1b]**

| | Example 7 | Example 8 | Example 9 | Example 10 | Example 11 | Comparative Example 1 |
|---|---|---|---|---|---|---|
| Value difference (%) | 0 | 0 | 0 | 50 | 50 | 50 |
| Saturation difference (%) | 0 | 0 | 0 | 50 | 0 | 0 |
| Hue difference (degrees) | 90° | 180° | 25° | 50° | 0° | 0° |
| Length in tire circumferential direction of gradation portion (mm) | 220 | 220 | 220 | 220 | 55 | - |
| Length in tire radial direction of gradation portion (mm) | 6 | 6 | 6 | 6 | 6 | 55 |
| Noticeability of unevenness (three-level sensory evaluation) | 3 | 3 | 2 | 3 | 3 | 1 |

**[Table 2]**

| | Example 12 | Example 13 | Example 14 | Example 15 | Example 16 | Example 17 |
|---|---|---|---|---|---|---|
| Value difference (%) | 50 | 75 | 25 | 0 | 0 | 0 |
| Saturation difference (%) | 0 | 0 | 0 | 50 | 75 | 25 |
| Hue difference (degrees) | 0° | 0° | 0° | 0° | 0° | 0° |
| Length in tire circumferential direction of gradation portion (mm) | 150 | 150 | 150 | 150 | 150 | 150 |
| Length in tire radial direction of gradation portion (mm) | - | - | - | - | - | - |
| Noticeability of unevenness (three-level sensory evaluation) | 3 | 3 | 2 | 3 | 3 | 2 |

**[Table 2b]**

| | Example 18 | Example 19 | Example 20 | Example 21 | Conventional Example 1 |
|---|---|---|---|---|---|
| Value difference (%) | 0 | 0 | 0 | 50 | - |
| Saturation difference (%) | 0 | 0 | 0 | 50 | - |
| Hue difference (degrees) | 90° | 180° | 25° | 90° | - |
| Length in tire circumferential direction of gradation portion (mm) | 150 | 150 | 150 | 150 | - |
| Length in tire radial direction of gradation portion (mm) | - | - | - | - | - |
| Noticeability of unevenness (three-level sensory evaluation) | 3 | 3 | 2 | 3 | 1 |

As is clear from the results in Tables 1a, 1b, 2a and 2b, Example Tires 1 to 21, in which the present invention was applied, can reduce the noticeability of the unevenness occurring in the side portion outer surface of the tire to roughly the same level as when the decoration portion is formed by ridges.

### (Evaluation 2)

Next, an experiment is described in which the decoration portion of example tires according to Embodiment 3 of the present invention was varied, and the unevenness occurring in the side portion of each tire was visually confirmed to evaluate the noticeability of the unevenness.

The tires in Examples 22 to 39 each had a size of 195/65R15, and using FIG. 5 as a starting point, the side portion of each tire was provided with a decoration portion and an inner decoration portion in which the gradation portion was changed as shown in Tables 3a and 3b. In the tires of Examples 22 to 39, the range in which the decoration portion and the inner decoration portion were provided was an annular region extending 67 mm from a position 10 mm toward the tire radial direction outer side from the rim line, and in the tire of Example 39, the range in which the decoration portion and the inner decoration portion were provided was an annular region extending 67 mm from a position 33.4 mm toward the tire radial direction outer side from the rim line. Tables 3a and 3b show the value difference (%), saturation difference (%), and hue difference (degrees) of the gradation portion in the decoration portion of each tire in accordance with the HSV model, as well as the phase difference (%) in the decoration portion between adjacent decoration portion rows, the ratio (%) of the length to the width of each decoration portion, the width (mm) of each decoration portion, the product (%) of value and saturation of the inner decoration portion, and the range in which the inner decoration portion was provided in the tire radial direction (as a ratio (%) of the displayable region).

The tire of Conventional Example 1 had a size of 195/65R15, and a decoration portion formed by ridges was provided in the side portion.

The noticeability of the unevenness was determined visually after mounting each test tire on a 6J × 15 size rim and applying maximum internal pressure (240 kPa) in accordance with JATMA regulations. Tables 3a and 3b list the evaluation results. The results of Tables 3a and 3b represent a three-level visual evaluation by 30 viewers. When the number of viewers considering that the unevenness was noticeable was less than 10, a value of "3" was assigned. When the number of viewers considering that the unevenness was noticeable was at least 10 and less than 20, a value of "2" was assigned. Finally, when the number of viewers considering that the unevenness was noticeable was at least 20, a value of "1" was assigned.

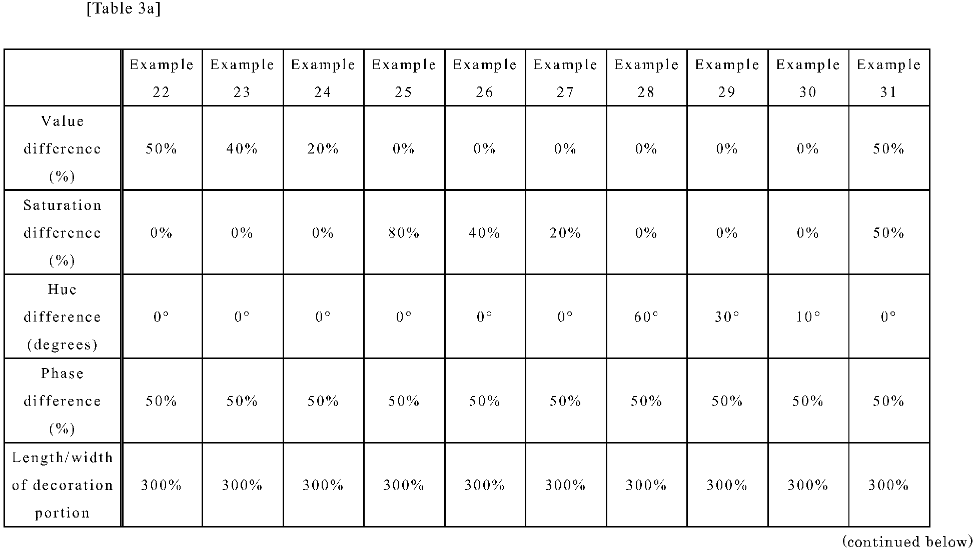

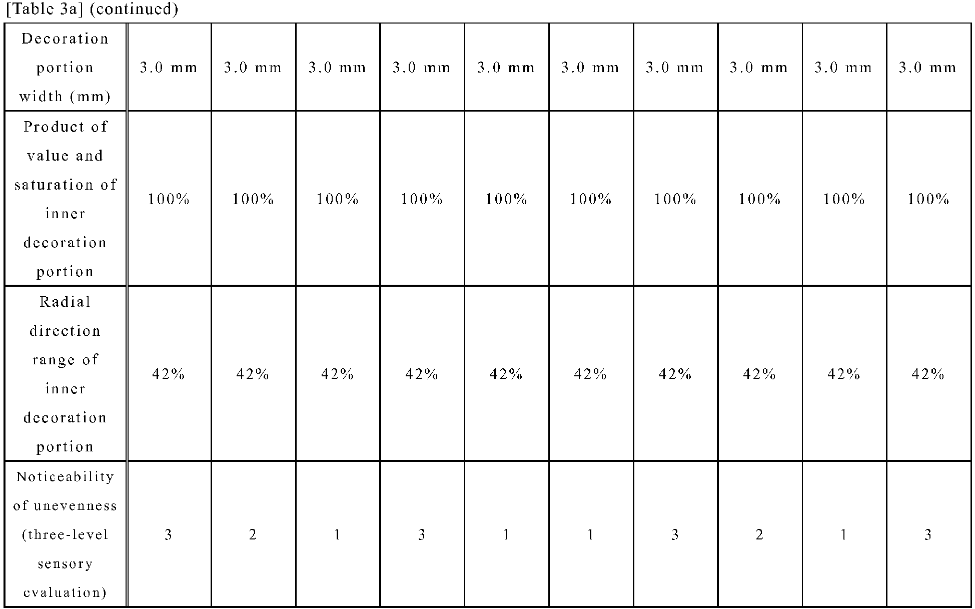

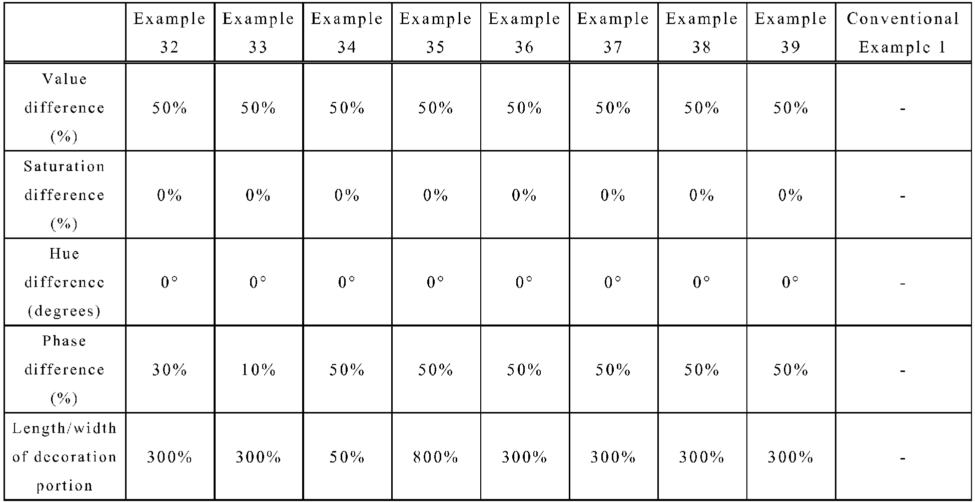

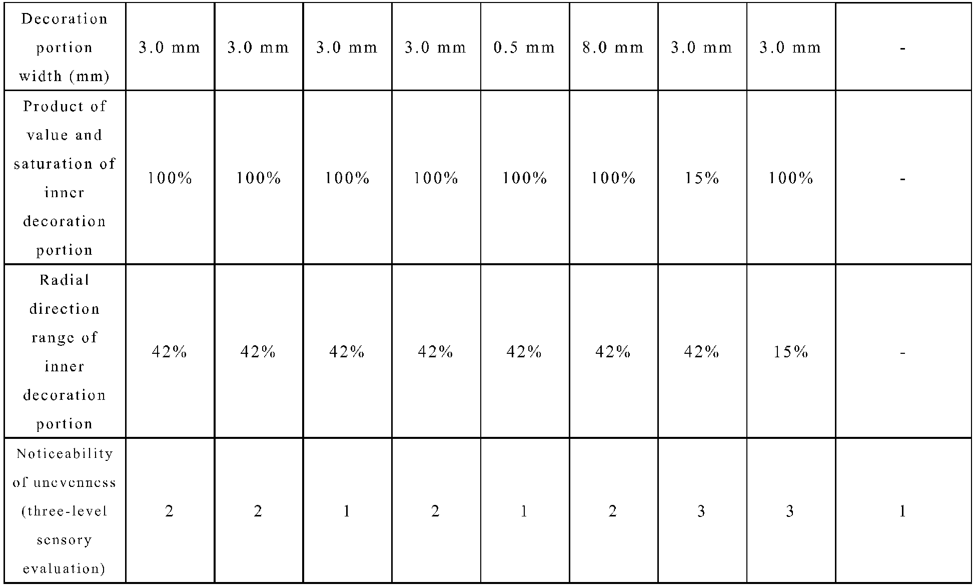

As is also clear from the results in Tables 3a and 3b, as compared to when forming the decoration portion with ridges, the tires of Examples 22 to 39 can further reduce the noticeability of the unevenness occurring in the side portion outer surface of the tire (or at least reduce the noticeability to roughly the same level).

### INDUSTRIAL APPLICABILITY

According to the present invention, it is possible to provide a new technique, instead of forming a plurality of ridges, that can reduce the noticeability of unevenness on the side portion outer surface of a tire.

### REFERENCE SIGNS LIST

3: Bead portion
5: Sidewall
7: Tread portion
9: Bead core
11: Carcass layer
13: Belt layer
15: Side portion
17: Decoration portion
19: Gradation portion
25: Decoration portion
27: Gradation portion
115: Side portion
117: Decoration portion
118: Inner decoration portion
119: Gradation portion
121: Decoration portion row
123: Gradation element
m: Rim line
R: Rim

## Claims

1. A tire comprising:
a decoration portion, formed by printing, extending in a tire circumferential direction in at least a portion of an outer surface of at least one side portion of the tire,
the decoration portion including at least one gradation portion in which at least one of hue, saturation, and value changes incrementally in a longitudinal direction.

2. The tire according to claim 1,
the at least one gradation portion comprising a plurality of gradation portions on the outer surface of at least one side portion of the tire, each gradation portion being strip-shaped with a greater length in the longitudinal direction than in a width direction, and
the strip-shaped gradation portions being provided continuously in the longitudinal direction so that color shades are repeated in the tire circumferential direction, and two or more of the gradation portions being adjacent in the width direction.

3. The tire according to claim 1 or 2, shades of gradation portions adjacent in the width direction being shifted in phase from each other in the longitudinal direction.

4. The tire according to any one of claims 1 through 3, three or more of the strip-shaped gradation portions being provided in the width direction, and shades of gradation portions adjacent in the width direction, with one gradation portion therebetween, being in phase when viewed in the longitudinal direction.

5. The tire according to any one of claims 1 through 4, the gradation portion having a value difference of at least 50%, a saturation difference of at least 50%, and/or a hue difference of at least 40°.

6. The tire according to any one of claims 1 through 5, at least one of hue, saturation, and value of the gradation portion changing, from one edge to the other edge of the gradation portion in the longitudinal direction, so as to approach a tire ground color of black.

7. The tire according to any one of claims 1 through 6, the longitudinal direction being along the tire circumferential direction.

8. The tire according to any one of claims 1 through 7, at least one of hue, saturation, and value of the gradation portion also changing incrementally in the tire radial direction.

9. The tire according to any one of claims 1 through 8, a width of the gradation portion being in a range of 1 mm to 5 mm.

10. The tire according to any one of claims 1 through 9, the decoration portion being on the side portion in a region further toward a tire radial direction outer side than a tire maximum width position.

11. The tire according to any one of claims 1 through 10, the gradation portion being rectangular.

12. The tire according to any one of claims 1 through 11, further comprising an inner decoration portion, formed by printing, in a region on a tire radial direction inner side of a region in which the decoration portion is provided.

13. The tire according to any one of claims 1 through 12, the inner decoration portion being a color such that a product of value and saturation is at least 20%.
